# EUROPÄISCHE PATENTSCHRIFT

(11) **EP 0 897 880 B1**
(45) Veröffentlichungstag und Bekanntmachung des Hinweises auf die Patenterteilung: **21.12.2005**
(21) Anmeldenummer: 97114322.7
(22) Anmeldetag: 20.08.1997
(51) Int. Cl.: B65G 1/137

(54) **Verfahren zum Kommissionieren und Verpacken und/oder Verteilen von Gegenständen**
Method for ordering, packing and/or distributing articles
Procédé pour la préparation de commandes, d'emballage et/ou la distribution d'articles

(43) Veröffentlichungstag der Anmeldung: 24.02.1999
(73) Patentinhaber: Papst Licensing GmbH & Co. KG, 78112 St Georgen (DE)
(72) Erfinder: Christ, Ferdinand, 91575 Windsbach (DE); Pawlikowski, Georg, 91522 Ansbach (DE)
(74) Vertreter: Rau, Albrecht

(56) Entgegenhaltungen:
- EP-A- 0 742 164
- WO-A-98/49078

## Beschreibung

Die Erfindung betrifft ein Verfahren zum Kommissionieren und Verpacken und/oder Verteilen von Gegenständen, die in einem Kommissionierbereich kommissioniert und in einem Verpackungs- oder Verteilbereich verpackt und/oder verteilt werden, und ferner ein System zum Kommissionieren und Verpacken und/oder Verteilen von Gegenständen.

Vor allem im Großversandhandel, in dem täglich mehrere einhunderttausend Artikel bzw. Sendungen kommissioniert und verpackt bzw. verteilt werden müssen, spielt der Kommissionier- bzw. Verteilbetrieb eine entscheidende Rolle im Hinblick auf die Effizienz des Versands, und bildet also folglich einen für die Rentabilität höchstbeachtlichen Faktor. Bei bisher bekannten neueren Verfahren hat es sich durchgesetzt, im Kommissionierbereich, also in dem Bereich, in dem die Bestellwaren und Verteilwaren gelagert sind, diese vollautomatisch zu kommissionieren, wozu Kommissionierautomaten eingesetzt werden. Diese ermöglichen es, quasi ohne menschliche Hilfe sämtliche im Rahmen eines Auftrags zu kommissionierenden Gegenstände aus dem Lager zu entnehmen und der weiteren Bearbeitung zugänglich zu machen. Hierfür sind, natürlich abhängig von den zu kommissionierenden Waren, unterschiedlichste Kommissionierautomaten und -stationen bekannt. Das Kennzeichen sämtlicher derartig ausgestatteter Kommissionierarbeiten ist aber, daß ein weitestgehend vollautomatischer Betrieb realisiert ist, der die Kommissionierung heutzutage höchst effizient gestalten läßt.

Diese sich aus der fast vollständigen Automatisierung ergebenden Vorteile sind aber in dem nachgeschalteten Verpackungs- bzw. Verteilbereichen nicht gegeben. Denn dort sind nach wie vor eine Vielzahl an manuellen Tätigkeiten erforderlich, um die vollautomatisch kommissionierten Gegenstände entsprechend einzupacken bzw. zu verteilen. Diese Probleme sind insbesondere dann sehr gravierend, wenn - wie dies im Großhandel der Fall ist - eine Vielzahl unterschiedlichster Gegenstände bearbeitet werden müssen. Denn die im Rahmen des Großhandels zu bearbeitenden Waren setzen sich aus einem sehr breiten Gegenstandsspektrum zusammen, angefangen von Bekleidungsstücken jeglicher Art über kleinere Haushaltsgegenstände, Spielzeug, Sportartikel bis hin zu großen Gerätschaften wie beispielsweise Fernseher, Haushaltsgeräten wie Wasch- oder Spülmaschinen oder dergleichen, oder entsprechenden anderen elektrischen Gerätschaften.

Aus der extremen Vielzahl der zu bearbeitenden Gegenstände ergibt sich im Stand der Technik die Notwendigkeit, hierfür eine große Anzahl an Personen bereitzustellen, die für die manuelle Verpackung bzw. Verteilung der unterschiedlichen Gegenstände auftragsspezifisch zuständig sind. Hieraus resultiert aber ein beachtlicher Kostenaufwand, der für die Unterhaltung des Mitarbeiterstabes aufzubringen ist und der sich auf die Rentabilität negativ auswirkt. Da es sich um rein manuelle Tätigkeiten handelt, unterliegt der gesamte Bearbeitungsprozeß auch einer Fehlerquote, d. h. es werden fehlerhaft Gegenstände verpackt oder verteilt, was sich ebenfalls negativ für das Unternehmen auswirkt. Nicht zu vernachlässigen ist natürlich auch der aus der manuellen Handhabung resultierende Zeitaufwand, da jede Handhabung eine bestimmte Mindestzeit benötigt, die nicht unterschritten werden kann, und die letztlich durchsatzbegrenzend ist. Kompensierbar wäre dieser Nachteil durch eine Erhöhung der Bearbeiteranzahl, was sich aber wiederum nachteilig auf den Kostenpunkt auswirkt.

Aus der EP 0 742 164 A1 ist ein Verfahren sowie eine Vorrichtung zur Stückgutspeicherung bekannt.

Der Erfindung liegt das sich aus dem Stand der Technik ergebende Problem zugrunde, ein Verfahren der eingangs genannten Art dahin zu verbessern, daß die genannten Nachteile weitgehend vermieden werden und sich eine Effizienzsteigerung des Kommissionier- und Verpackungs- bzw. Verteilbetriebs erreichen läßt.

Zur Lösung dieses Problems ist ein Verfahren der eingangs genannten Art dadurch gekennzeichnet,
a) daß die zu verpackenden und/oder zu verteilenden auftragsspezifischen Gegenstände vollautomatisch kommissioniert werden,
b) daß, gegebenenfalls abhängig davon, ob ein Gegenstand bereits mit einem geeigneten Transport- oder Verpackungsmittel ausgestattet ist, gegenstands- und/oder auftragsspezifisch vollautomatisch ein Transport- oder Verpackungsmittel ausgewählt und dem oder den Gegenständen zugeordnet wird,
c) daß die kommissionierten Gegenstände vollautomatisch mit den jeweiligen Transport- oder Verpackungsmitteln zusammengeführt und auf oder in diese gegeben werden,
d) daß die Transport- oder Verpackungsmittel, und gegebenenfalls die Gegenstände, die bereits mit den Transport- oder Verpackungsmitteln ausgestattet sind, vollautomatisch verpackt und/oder verteilt werden, wobei sämtliche Schritte mittels einer elektronischen Steuerungsanlagerechnergesteuert erfolgen, und
e) daß die Gegenstände auf wenigstens einer ersten Transporteinrichtung und die Transport- oder Verpackungsmittel auf wenigstens einer zweiten Transporteinrichtung transportiert werden, wobei sich die Transporteinrichtungen an wenigstens einer ersten Übergabestelle kreuzen, an der die Gegenstände an die Transport- oder Verpackungsmittel übergeben oder in die Transport- oder Verpackungsmittel eingegeben werden.

Erfindungsgemäß wird also ein Verfahren geschaffen, das sowohl den Kommissionierbetrieb als auch den Verpackungs- bzw. Verteilbetrieb der kommissionierten Gegenstände vollautomatisch ermöglicht. Den jeweiligen vollautomatisch kommissionierten Gegenstände wird erfindungsgemäß mit besonderem Vorteil mittels der elektronischen Steuerungsanlage das jeweilige Transport- oder Verpackungsmittel zugeordnet, das von der Steuerungsanlage ausgewählt wird. Als Auswahlparameter dienen hierfür Gegenstandsmerkmale und/oder auftragsspezifische Merkmale, so daß sich quasi ein optimales Zuordnungsverhältnis erreichen läßt. Die Auswahl und Zuordnung erfolgt mit besonderem Vorteil nur dann, wenn der Gegenstand nicht bereits in einem geeigneten Transport- oder Verpackungsmittel angeordnet oder diesem bereits ein derartiges zugeordnet ist. Denn im Großversandhandel, in dem ja die unterschiedlichsten Gegenstände zu bearbeiten sind, werden häufig beispielsweise große Elektrogeräte wie Spülmaschinen, Waschmaschinen, Fernseher oder dergleichen bereits in entsprechend geeigneten Verpackungen gelagert bzw. sind bereits beispielsweise auf einer Palette angeordnet, auf welcher der Gegenstand auch für die Zustellung an den Kunden angeordnet bleiben kann. Das erfindungsgemäße Verfahren wirkt also in diesem Bereich selektiv und ordnet mit besonderem Vorteil nur dann entsprechende Transport- oder Verpackungsmittel zu, wenn dies auch tatsächlich erforderlich ist.

Nachfolgend werden die Gegenstände, denen ein Verpackungs- oder Transportmittel zugeordnet worden ist, mit dem jeweiligen Mittel zusammengeführt und in bzw. auf dieses gegeben. Dieser im Stand der Technik stets manuell durchzuführende Schritt ist also hier mit besonderem Vorteil jeweils vollautomatisiert. Die oben genannten, bereits mit einem Transport- oder Verpackungsmittel von geeigneter Art versehenen Gegenstände überspringen quasi diesen Schritt und werden erst im nächsten Schritt behandelt, in dem auch sie, wie die anderen Transport- oder Verpackungsmittel, in die die Gegenstände ein- oder aufgebracht worden sind, vollautomatisch verpackt bzw. verteilt werden. In diesem letzten Verfahrensschritt, der erfindungsgemäß ebenfalls vollautomatisch erfolgt, werden also die Gegenstände letztlich verpackt bzw. in einen anderen Lager- oder Bearbeitungsbereich, in dem sie anderweitig bearbeitet werden oder in dem der jeweilige Gegenstand angefordert wird, verteilt. Sämtliche Verfahrensschritte erfolgen mittels einer elektronischen Steuerungsanlage rechnergesteuert, so daß ein vollautomatischer Betrieb mit einfachen Mitteln realisiert ist, der es ermöglicht, daß die eingangs genannten Nachteile, die sich aus dem manuellen Tätigkeitsanteil ergeben, beseitigt werden können.

Die Transporteinrichtungen sind derart geführt, daß sie sich kreuzen, und so eine Übergabestelle bilden. Läuft beispielsweise die die Gegenstände transportierende Transporteinrichtung oberhalb der das Transport- oder Verpackungsmittel transportierenden Einrichtung, so kann die Übergabe einfach durch ein Abschieben der Gegenstände, die dann in das Transport- oder Verpackungsmittel fallen, erfolgen. Natürlich versteht sich der Begriff "kreuzen" auch dahingehend, daß die Transporteinrichtungen auch teilweise parallel geführt werden können, so daß einseitiges Überschieben oder dergleichen ermöglicht ist.

Aus verfahrenstechnischen Gründen hat es sich als besonders vorteilhaft erwiesen, wenn, wie erfindungsgemäß ferner vorgesehen sein kann, die Transport- oder Verpackungsmittel zumindest teilweise vor der Zusammenführung in einem Pufferspeicher zwischengespeichert und aus diesem abgezogen werden. Auf diese Weise ist gewährleistet, daß stets eine ausreichende Menge an dem jeweiligen Transport- oder Verpackungsmittel abrufbar zur Verfügung steht und sich in dieser Hinsicht keine den Betrieb hindernden Schwierigkeiten ergeben. Vorteilhaft ist es, wenn die Transport- oder Verpackungsmittel im Pufferspeicher nach ihrer Art und/oder ihrer Größe und/oder ihrem Volumen selektiert gespeichert werden, so daß ein selektiver Abzug möglich ist.

Im Rahmen der Erfindung kann ferner vorgesehen sein, daß als Transport- oder Verpackungsmittel Kartons, Wannen, Folien, Tüten, Paletten, Tablare oder dergleichen verwendet werden, wobei sich das jeweils angezogene Mittel, wie bereits eingangs erwähnt, danach richtet, welcher Gegenstand einzugeben ist bzw. wie der spezifische Auftrag in seiner Gesamtheit strukturiert ist. D. h., daß, wenn ein Auftrag beispielsweise mehrere Kleidungsstücke, sog. "soft goods" und ein oder mehrere "hard good"-Gegenstände umfaßt, beispielsweise ein Karton ausgewählt wird, in den dann sämtliche Gegenstände eingegeben werden. Würde sich der Auftrag nur aus Bekleidungsstücken, also "soft good" zusammensetzen, wäre die Zuordnung einer Folie, in die die Gegenstände eingeschweißt werden, oder einer geeigneten Tüte ausreichend. Dies wird mit besonderem Vorteil mittel des elektronischen Steuerungsanlage vollautomatisch gesteuert.

Erfindungsgemäß ist ferner vorgesehen, daß die Gegenstände auf wenigstens einer ersten Transporteinrichtung und die Transport- oder Verpackungsmittel auf wenigstens einer zweiten Transporteinrichtung transportiert werden, wobei sich die Transporteinrichtungen an wenigstens einer ersten Übergabestelle kreuzen, an der die Gegenstände an die Transport- oder Verpackungsmittel übergeben oder in die Transport- oder Verpackungsmittel eingegeben werden. Die Transporteinrichtungen, bei denen es sich um jede bekannte Transporteinrichtung handeln kann, als beispielsweise Bandförderer, Gurtförderer, Rollenförderer oder dergleichen, sind also mit besonderem Vorteil einerseits allein den Gegenständen zugeordnet, andererseits aber auch selektiv einem jeweiligen Transport- oder Verpackungsmittel, wobei natürlich dann, wenn mehrere unterschiedliche Mittel verwendet werden, jeweils einem für den Transport auf einer derartigen Transporteinrichtung geeigneten Mittel eine eigene Transporteinrichtung zugeordnet ist. D. h., daß beispielsweise für die Paletten eine eigene Transporteinrichtung vorgesehen ist, gleich wie dies für die Kartons und die Tablare der Fall ist.

Da vor allem im Großversandhandel in Folge des extremen Vielzahl der unterschiedlichen zu behandelnden Gegenstände es in der Regel erforderlich ist, unterschiedliche Transport- und Verpackungsmittel bereitzustellen, kann auf Basis der Erfindung ferner vorgesehen sein, daß die Gegenstände auf der ersten Transporteinrichtung, von der natürlich auch mehrere vorgesehen sein können, abhängig zum einen von der Anzahl der kommissionierten Gegenstände, und auch davon, ob mehrere Kommissionierbereiche oder verschiedene Lagebereiche für unterschiedliche Gegenstandsarten vorgesehen sind, zu wenigstens einer, gegebenenfalls der ersten nachgeschalteten weiteren Übergabestelle transportiert werden, an der die Gegenstände an die Transport- oder Verpackungsmittel übergeben oder in die Transport- oder Verpackungsmittel eingegeben werden. Die Gegenstände werden also an mehreren Übergabestellen vorbeitransportiert, wobei an jeder Übergabestelle beispielsweise die Übergabe in eine andere Art von Transport- oder Verpackungsmittel möglich ist. Es liegt natürlich ebenfalls im Rahmen der Erfindung, wenn bei einer extrem großen Anzahl an Gegenständen und einer Präferenz eines bestimmten Transport- oder Verpackungsmittels dieses auf verschiedenen Transporteinrichtungen gleichzeitig geführt wird, die mit der oder den die Gegenstände transportierenden Transporteinrichtungen mehrere Übergabestellen bilden.

Das erfindungsgemäße Verfahren ermöglicht einen vollautomatischen Lagerbetrieb angefangen vom Kommissionieren bis hin zum Verpacken bzw. Verteilen. Die in einem derartigen Lager oder ähnlichem anfallenden, bis dahin in der Regel manuellen Tätigkeiten sind aber nicht nur auf die oben beschriebenen Tätigkeiten beschränkt. Vielmehr ist es erforderlich, die belegten oder befüllten Transport- oder Verpackungsmittel zu kontrollieren, um möglichst alle fehlerhaft belegten oder befüllten Transport- oder Verpackungsmittel zu erkennen und auszusondern. Um auch bei dem erfindungsgemäßen Verfahren diesbezüglich Sicherheit zu haben, kann in Weiterbildung des Erfindungsgedankens vorgesehen sein, daß die belegten oder befüllten Transport- oder Verpackungsmittel vor dem Verpacken und/oder Verteilen in einer Kontrollstation hinsichtlich der Belegung oder Befüllung vorzugsweise vollautomatisch kontrolliert, insbesondere gewogen werden, wobei fehlerhaft belegte oder befüllte Transport- oder Verpackungsmittel zur weiteren Bearbeitung vorzugsweise vollautomatisch ausgesondert werden. Wird die vollautomatische Variante gewählt, kann die Effizienz des gesamten Verfahrens natürlich noch weiter gesteigert werden. Als derartige, einen vollautomatischen Betrieb ermöglichten Kontrollstationen sind bereits unterschiedliche Arten bekannt, wobei sich insbesondere eine in eine Transporteinrichtung integrierte Waage als vorteilhaft erwiesen hat.

Erfindungsgemäß kann ferner vorgesehen sein, daß den belegten oder gefüllten, gegebenenfalls bereits verpackten Transport- oder Verpackungsmitteln, eine Rechnung, ein Lieferschein oder dergleichen vorzugsweise vollautomatisch zugeführt wird, wobei auch hier die den vollautomatischen Betrieb gewährleistende Variante vorteilhaft ist. Um das Gesamtverfahren schließlich derart zu vervollständigen, daß an seinem Ende komplett versandfertige Verfahrenserzeugnisse zur Verfügung stehen, kann im Rahmen der Erfindung ferner vorgesehen sein, daß die verpackten Transport- oder Verpackungsmittel vorzugsweise vollautomatisch einer Etikettier-, Adressier- und/oder Frankiereinrichung zugeführt werden.

Neben dem erfindungsgemäßen Verfahren betrifft die Erfindung ferner ein System zum Kommissionieren, und Verpacken und/oer Verteilen von Gegenständen, mit einem Kommissionierbereich und einem dem Kommissionierbereich nachgeordneten Verpackungs- und/oder Verteilbereich, wobei die auftragsspezifischen Gegenstände in dem Kommissionierbereich vollautomatisch mittels wenigstens einer Kommissionierstation kommissioniert werden. Das erfindungsgemäße System zeichnet sich dadurch aus, daß im Verpackungs- und/oder Verteilbereich eine vollautomatische, rechnergesteuerte Verpackungs- und/oder Verteilstation angeordnet ist, mittels der gegenstands- und/oder auftragsspezifisch ausgewählte und dem oder den Gegenständen zugeordnete Transport- oder Verpackungsmittel mit den aus dem Kommissionierbereich mittels wenigstens einer ersten Transporteinrichtung zugeführten Gegenständen zur Aufnahme derselben zusammengeführt und anschließend verpackt und/oder verteilt werden, wobei die Verpackungs- und/oder Verteilstation wenigstens eine zweite Tranporteinrichtung zum Transportieren der Transport- oder Verpackungsmittel aufweist, die mit der ersten Transporteinrichtung unter Bildung wenigstens einer Übergabestelle durch sich kreuzende Transportwege, in Verbindung steht, und daß eine elektronische Steuerungsanlage (36) zur Steuerung der Kommissionierstation und der Verpackungs- und/oder Verteilstation vorgesehen ist.

Weitere Ausführungsformen des erfindungsgemäßen Systems sind den abhängigen Unteransprüchen zu entnehmen. Weitere Vorteile, Merkmale und Einzelheiten der Erfindung ergeben sich aus dem im folgenden beschriebenen Beispiel sowie anhand der Zeichnungen. Dabei zeigen:
- Fig. 1: Ein prinzipielles Flußdiagramm zur Darstellung der einzelnen Verfah- rensschritte des erfindungsgemäßen Verfahrens, um
- Fig. 2: einen beispielhaften Aufbau eines Lagers mit einem Kommissionier- bereich und einem Verpackungs- und Verteilbereich.

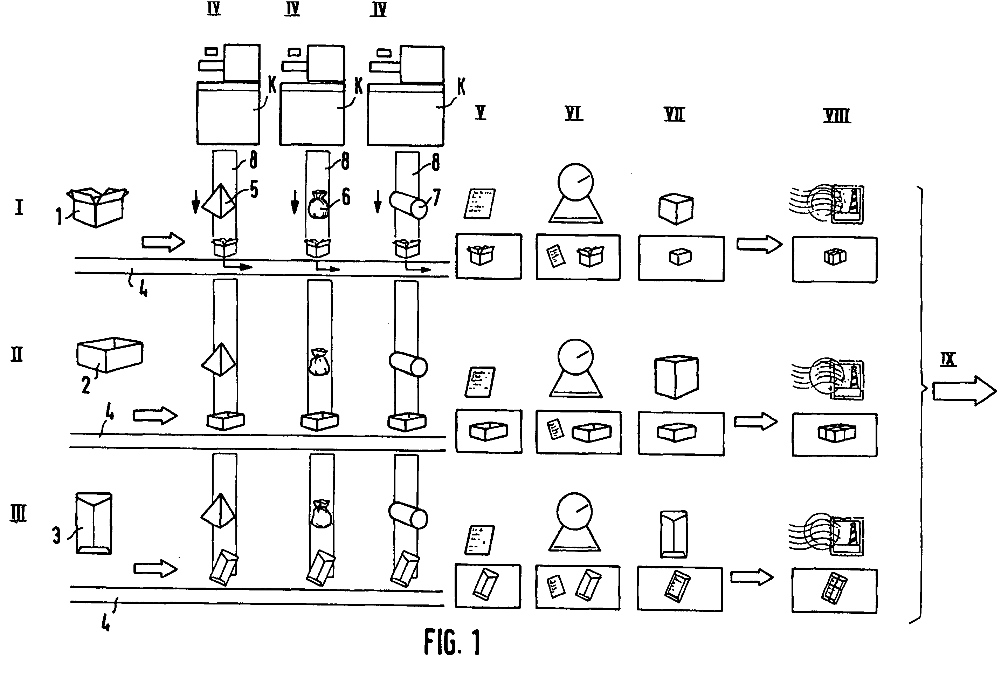

Fig. 1 zeigt als Flußdiagramm in schematischer Form den Ablauf des erfindungsgemäßen Verfahrens und die einzelnen hierbei durchgeführten Verfahrensschritte. Gezeigt sind exemplarisch drei verschiedenen Transport- oder Verpackungsmittel, nämlich in Flußzeile I einen Karton 1, in Flußzeile II eine Wanne 2, und in Flußzeile III eine Tüte 3. Das Beispiel läßt sich bezüglich weiterer Transport- oder Verpackungsmittel in entsprechender Weise fortsetzen. Die Transport- oder Verpackungsmittel 1, 2, 3 werden, wie durch den jeweiligen Pfeil dargestellt, auf einer stilisiert angedeuteten, jedem einzelnen Mittel zugeordneten Transporteinrichtung 4 transportiert und mit den jeweiligen Gegenständen zusammengeführt.

Im gezeigten Flußdiagramm ist zwischen drei verschiedenen Gegenstandsarten exemplarisch differenziert. Einmal sog. "hard good" 5, also festen Gegenständen wie beispielsweise einem Buch oder ähnlichem, sog. "soft good" 6, beispielsweise Bekleidungsstücke wie T-Shirts, Socken oder ähnlichem und sonstigem Kommissioniergut 7, welches insoweit keinem der Güter 5, 6 zuzuordnen ist. Jedes der Güter 5, 6, 7 ist im Kommissionierbereich, jeweils für jedes Gut dargestellt und mit K gekennzeichnet, gelagert und wird dort vollautomatisch kommissioniert. Auf entsprechenden, jedem Gegenstand zugeordneten Transporteinrichtungen 9 werden die Güter 5, 6, 7 transportiert, wie durch die entsprechenden Pfeile angedeutet. Am entsprechenden Übergabepunkt mit einem der Transport- oder Verpakkungsmittel 1, 2 oder 3 werden die jeweiligen Gegenstände gegenstands- oder auftragsspezifisch in das jeweilige Transport- oder Verpackungsmittel abgegeben, je nach dem, welches für den jeweiligen Gegenstand von der übergreifenden Steuerungsanlage ausgewählt worden ist. Nach Übergabe in das jeweilige Transport- oder Verpackungsmittel werden diese weitergefördert und gelangen in den Bereich V, in welchem ein vollautomatisch erstellter Lieferschein bzw. eine Rechnung oder dergleichen dem jeweiligen Transport- oder Verpackungsmittel zugeführt wird. Im daran anschließenden Bereich VI, in den die nach wie vor auf der jeweiligen Transporteinrichtung 4 befindlichen Transport- oder Verpackungsmittel transportiert werden, erfolgt die Befüllungs- oder Belegungskontrolle, die ebenfalls vollautomatisch durchgeführt wird. Im daran anschließenden Bereich VII werden die Transport- oder Verpackungsmittel entsprechend verschlossen, beispielsweise mit Klebebändern, Klammer oder dergleichen oder aber im Falle der Folie verschweißt.

Nach erfolgter Etikettierung und gegebenenfalls Adressierung im Bereich VIII werden die dann vollständig versandfertigen Transport- oder Verpackungsmittel einer Sorteranlage zugeführt, in welcher sie nach Zustellbereichen oder ähnlichem sortiert werden, was durch den Pfeil IX dargestellt ist.

Im in Fig. 1 dargestellten Flußplan ist lediglich die "Verpackungsvariante" des erfindungsgemäßen Verfahrens beschrieben, in welcher also die mit dem Gütern befüllten Verpackungsmittel versandfertig verpackt werden. Neben einer Versandvariante umfaßt das erfindungsgemäße Verfahren aber auch die zusätzliche "Verteilvariante", was heißt, daß es insbesondere in Großversandhäusern häufig erforderlich ist, Gegenstände, die in einem Lager eingelagert sind, aus diesem heraus zu kommissionieren und einem anderen Lagerbereich, in dem weitere mit dem im ersten Lager- oder Kommissionierbereich kommissionierten Gegenständen zusammenzuführenden Gegenständen zuzuführen sind. Zu diesem Zweck, für den sich insbesondere die Wanne eignet, wird die entsprechende, der Steuerungsanlage bekannte Wanne aus dem in Flußzeile II darstellten Verfahrensablauf rechtzeitig ausgeschleußt, beispielsweise vor Erstellung des Lieferscheins oder aber nach dem Kontrollpunkt, so daß die spezifische Wanne der Verpakkungsanlage nicht zugeführt wird. Vielmehr wird diese spezifische Wanne auf geeigneten Transporteinrichtungen aus dem Bereich abgezogen und hausintern beispielsweise in den anderen Lagerbereich, in den der Gegenstand angefordert ist, befördert.

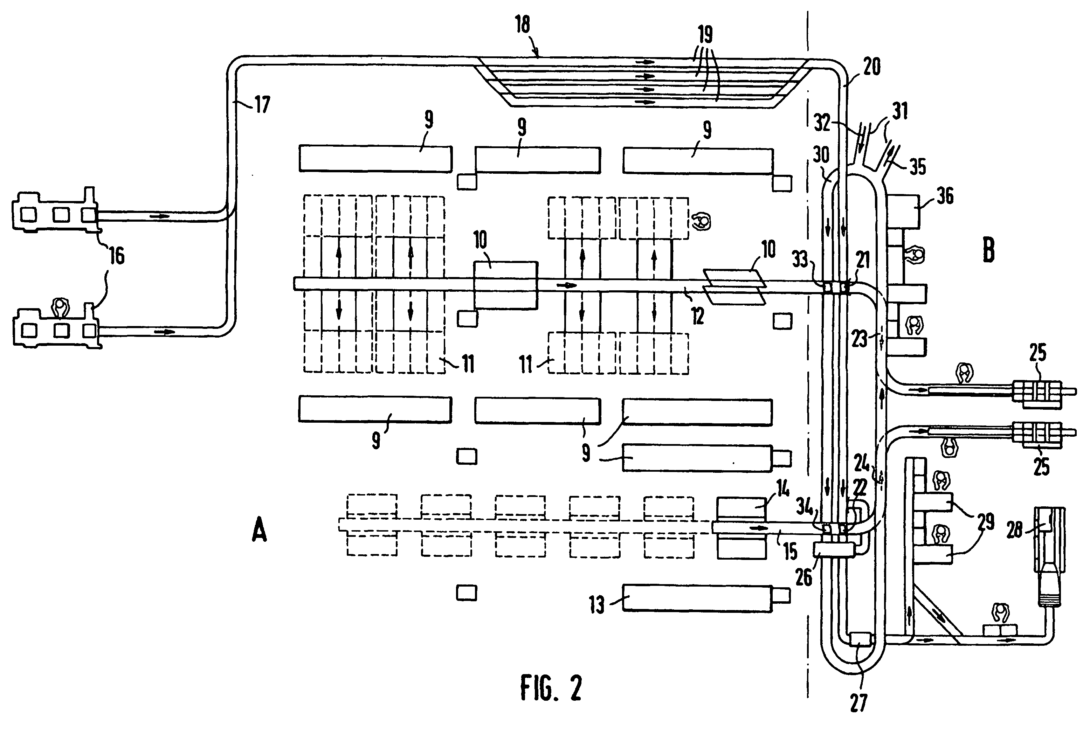

Fig. 2 zeigt beispielhaft ein Lager, welches zur Durchführung des erfindungsgemäßen Verfahrens geeignet ist. Dieses Lager läßt sich grob in einen Kommissionierbereich A und einen Verpackungs- und/oder Verteilbereich B untergliedern, wie durch die strichpunktierte Vertikallinie angedeutet. Der Kommissionierbereich A umfaßt eine Vielzahl von Regalen 9, die dem "hard good"-Bereich zugeordnet sind, um beispielsweise mittels nicht dargestellter Regalbediengeräte bearbeitet werden. Neben diesen Regaleinheiten können im Kommissionierbereich weitere Kommissioniereinrichtungen wie beispielsweise Schachtkommissionierautomaten 10, 11 unterschiedlicher Ausführungsformen vorgesehen sein, der konkrete Bereichsaufbau ist in keiner Weise begrenzt. Den jeweiligen Kommissionierelementen ist im gezeigten Beispiel in einfacher Ausführung eine Transporteinrichtung 12 zugeordnet, auf welcher die kommissionierten und dem Verpackungs- bzw. Verteilbereich B zuzuführenden Gegenstände aufgebracht werden. Der Kommissionierbereich A umfaßt neben dem "hard good"-Bereich auch einen "soft good"-Bereich, in dem ebenfalls eine entsprechend mit einem Regalbediengerät bearbeitbare Regaleinrichtung 13 und eine weitere "soft good"-Kommissioniereinrichtung 14 angeordnet ist, wobei, wie gestrichelt angedeutet ist, natürlich eine Vielzahl derartiger Einrichtungen 14 (und auch 13) vorgesehen sein können. Auch diesem Bereich ist exemplarisch eine einzelne Transporteinrichtung 15 zugeordnet. Auf den Transporteinrichtungen 12, 15 werden die im jeweiligen Bereich kommissionierten Gegenstände in den Verpackungs- oder Verteilbereich B befördert.

Dem Verpackungs- oder Verteilbereich B zugeordnet ist zunächst - im gezeigten Beispiel an entfernter Position - eine Einrichtung zum Kartonaufrichten 16, in welcher Kartons, die im gezeigten Beispiel als Transport- oder Verpackungsmittel verwendet werden, aufgerichtet werden. Diese aufgerichteten Kartons werden auf einer Transporteinrichtung 17 zunächst einer Speichereinrichtung 18 zugeführt, die im gezeigten Beispiel aus mehreren parallellaufenden Transportschienen 19 besteht. In dieser Speichereinrichtung 18 werden die aufgerichteten Karton beispielsweise selektiert nach ihrer Größe oder ihrem Volumen zwischengepuffert, so daß stets eine ausreichende Anzahl an Kartons zur Verfügung steht. Über eine nicht näher spezifizierte Steuerungsanlage 36 gesteuert werden bei Bedarf die jeweiligen Kartons über die aus dem Speicherbereich 18 führende Transporteinrichtung 20 abgezogen und direkt in den Bereich B gefördert. Wie Fig. 2 zu entnehmen ist, verlaufen die Transporteinrichtungen 12, 15 bzw. 20 i. w. rechtwinklig zueinander, so daß sie sich an entsprechenden Übergabestellen 21, 22 kreuzen. An diesen Übergabestellen werden die auf der jeweiligen Transporteinrichtung 12, 15 geführten Gegenstände - sofern von der Steuerungsanlage vorbestimmt - in den darunter geförderten Karton gegeben. Ist der jeweilige Gegenstand nicht zur Eingabe in den Karton bestimmt, wird er weiter auf der jeweiligen Transporteinrichtung geführt, wie durch die Pfeile 23, 24 angedeutet ist. Die Gegenstände gelangen schließlich zu Folienpackmaschinen 25, in denen sie in Folien eingeben bzw. in diese verschweißt werden.

Die mit den Gegenständen befüllten Karton werden auf der Transporteinrichtung 20 weitergefördert, wobei nach Durchlaufen der Übergabestation 21 der jeweilige, gegebenenfalls dort bereits beladene Karton auch die Übergabestation 22 passiert, in welcher weitere Güter eingeladen werden können, sofern auftragsspezifisch vorgesehen. Im gezeigten Ausführungsbeispiel ist der Übergabestation 22 eine Fehlermeldungsvorrichtung 26 nachgeschaltet, welcher als erste Kontrollstation dient. Nach Durchlaufen der Übergabestation 22 gelangt der befüllte Karton an eine Wiegestation 27, in welcher das Gewicht und damit die korrekte Belegung kontrolliert wird. Anschließend gelangt der Karton beispielsweise an eine Kartonschließervorrichtung 28, oder aber an entsprechenden Stationen 29, in welchen gegebenenfalls noch eine zusätzliche, mitunter manuelle Behandlung möglich ist.

Fig. 2 ist ferner ein weiterer Kreislauf 30 zu entnehmen, auf dem beispielsweise Wannen geführt werden. Dieser Kreislauf 30 steht über Zu- und Ausschleusungseinrichtungen 31 beispielsweise mit dem Versandhaus in Verbindung und dient unter anderen dazu, Gegenstände, die von einer lagerexternen Stelle angefordert sind, zu dieser zu bringen. Über die Zuführung (Pfeil 32) zum Kreislauf 30 werden die Wannen zugeführt und wandern, wie durch den Pfeil dargestellt auf diesem entlang. Da sich der Kreislauf 30 ebenfalls mit den Transporteinrichtungen 12, 15 kreuzt, werden auch hier entsprechende Übergabestellen 33, 34 gebildet, in welchen, sofern erforderlich, auf den Einrichtungen transportierte Gegenstände eingegeben werden können. Nach Passieren der Übergabestation 34 läuft die Wanne längs des Kreislaufes zur Ausschleuseinrichtung (Pfeil 35), und verläßt so den Verpackungs- bzw. Verteilbereich, um auf einer geeigneten Transporteinrichtung dem Versandhaus zugeführt werden können.

Die in Fig. 2 gezeigte Lagerkonfiguration ist lediglich exemplarisch und keinesfalls begrenzend. Das Lager kann jedwede Konfiguration sowohl hinsichtlich des Aufbaus des Kommissionierbereiches als auch der Transporteinrichtungsführung, Übergabestellenbildung, etc. zeigen, was gleichermaßen auch für die Verwendung der Transport- oder Verpackungsmittel gilt.

## Patentansprüche

1. Verfahren zum Kommissionieren und Verpacken und/oder Verteilen von Gegenständen, die in einem Kommissionierbereich kommissioniert und in einem Verpackungs- oder Verteilbereich verpackt und/oder verteilt werden, wobei
a) die zu verpackenden und/oder zu verteilenden auftragsspezifischen Gegenstände vollautomatisch kommissioniert werden, **dadurch gekennzeichnet,**
b) daß, gegebenenfalls abhängig davon, ob ein Gegenstand bereits mit einem geeigneten Transport- oder Verpackungsmittel ausgestattet ist, gegenstands- und/oder auftragsspezifisch vollautomatisch ein Transport- oder Verpackungsmittel ausgewählt und dem oder den Gegenständen zugeordnet wird,
c) daß die kommissionierten Gegenstände vollautomatisch mit den jeweiligen Transport- oder Verpackungsmitteln zusammengeführt und auf oder in diese gegeben werden,
d) daß die Transport- oder Verpackungsmittel, und gegebenenfalls die Gegenstände, die bereits mit den Transport- oder Verpackungsmitteln ausgestattet sind, vollautomatisch verpackt und/oder verteilt werden, wobei sämtliche Schritte mittels einer elektronischen Steuerungsanlagerechnergesteuert erfolgen, und
e) daß die Gegenstände auf wenigstens einer ersten Transporteinrichtung und die Transport- oder Verpackungsmittel auf wenigstens einer zweiten Transporteinrichtung transportiert werden, wobei sich die Transporteinrichtungen an wenigstens einer ersten Übergabestelle kreuzen, an der die Gegenstände an die Transport- oder Verpackungsmittel übergeben oder in die Transport- oder Verpackungsmittel eingegeben werden.

2. Verfahren nach Anspruch 1, **dadurch gekennzeichnet, daß** die Transport- der Verpackungsmittel zumindest teilweise vor der Zusammenführung in einem Pufferspeicher zwischengespeichert und aus diesem abgezogen werden.

3. Verfahren nach Anspruch 2, **dadurch gekennzeichnet, daß** die Transport- der Verpackungsmittel im Pufferspeicher nach ihrer Art und/oder ihrer Größe und/oder ihrem Volumen selektiert gespeichert werden.

4. Verfahren nach einem der vorangehenden Ansprüche, **dadurch gekennzeichnet, daß** die Gegenstände auf der ersten Transporteinrichtung zu wenigstens einer, gegebenenfalls der ersten nachgeschalteten, weiteren Übergabestelle transportiert werden, an der die Gegenstände an die Transport- oder Verpackungsmittel übergeben oder in die Transport- oder Verpackungsmittel eingegeben werden.

5. Verfahren nach einem der Ansprüche 1 bis 4, **dadurch gekennzeichnet, daß** bei Verwendung verschiedenartiger Transport- oder Verpackungsmittel jede Art auf einer eigenen zweiten Transporteinrichtung transportiert wird.

6. Verfahren nach einem der vorangehenden Ansprüche, **dadurch gekennzeichnet, daß** als Transport- oder Verpackungsmittel Kartons, Wannen, Folien, Tüten, Paletten, Tablare o. dgl. verwendet werden.

7. Verfahren nach einem der vorangehenden Ansprüche, **dadurch gekennzeichnet, daß** die belegten oder befüllten Transport- oder Verpackungsmittel vor dem Verpacken und/oder Verteilen in einer Kontrollstation hinsichtlich der Belegung oder Befüllung vorzugsweise vollautomatisch kontrolliert, insbesondere gewogen werden, wobei fehlerhaft belegte oder befüllte Transport- oder Verpackungsmittel zur weiteren Bearbeitung vorzugsweise vollautomatisch ausgesondert werden.

8. Verfahren nach einem der vorangehenden Ansprüche, **dadurch gekennzeichnet, daß** den belegten oder befüllten, gegebenenfalls bereits verpackten Transport- oder Verpackungsmitteln eine Rechnung, ein Lieferschein o. dgl. vorzugsweise vollautomatisch zugeführt wird.

9. Verfahren nach einem der vorangehenden Ansprüche, **dadurch gekennzeichnet, daß** die verpackten Transport- oder Verpackungsmittel vorzugsweise vollautomatisch einer Etikettier-, Adressier- und/oder Frankiereinrichtung zugeführt werden.

10. System zum Kommissionieren und Verpacken und/oder Verteilen von Gegenständen, insbesondere zur Durchführung des Verfahrens nach den Ansprüchen 1 bis 9, mit einem Kommissionierbereich und einem dem Kommissionierbereich nachgeordneten Verpackungs- und/oder Verteilbereich, wobei die auftragsspezifischen Gegenstände in dem Kommissionierbereich vollautomatisch mittels wenigstens einer Kommissionierstation kommissioniert werden, **dadurch gekennzeichnet, daß** im Verpackungs- und/oder Verteilbereich (B) eine vollautomatische, rechnergesteuerte Verpackungs- und/oder Verteilstation angeordnet ist, mittels der gegenstands- und/oder auftragsspezifisch ausgewählte und dem oder den Gegenständen zugeordnete Transport- oder Verpackungsmittel mit den aus dem Kommissionierbereich (A) mittels wenigstens einer ersten Transporteinrichtung (12, 15) zugeführten Gegenständen zur Aufnahme derselben zusammengeführt und anschließend verpackt und/oder verteilt werden, daß eine elektronische Steuerungsanlage (36) zur Steuerung der Kommissionierstation und der Verpackungs- und/oder Verteilstation vorgesehen ist, und daß die Verpackungs- und/oder Verteilstation wenigstens eine zweite Transporteinrichtung (20, 30) zum Transportieren der Transport- oder Verpackungsmittel aufweist, die mit der ersten Transporteinrichtung unter Bildung wenigstens einer Übergabestelle (21, 22, 33, 34) durch sich kreuzende Transportwege in Verbindung steht.

11. System nach Anspruch 10, **dadurch gekennzeichnet, daß** die Verpackungs- und/oder Verteilstation wenigstens einen Pufferspeicher (18) umfaßt, in dem die Transport- oder Verpackungsmittel zumindest teilweise vor dem Zuführen zwischengespeichert sind.

12. System nach Anspruch 10 oder 11, **dadurch gekennzeichnet, daß** mehrere zweite Transporteinrichtungen (20, 30) zum jeweiligen Transport von in ihrer Art verschiedenen Transport- oder Verpackungsmitteln vorgesehen sind.

13. System nach einem der Ansprüche 10 bis 12, **dadurch gekennzeichnet, daß** die Verpackungs- und/oder Verteilstation eine vorzugsweise vollautomatische Kontrollstation, insbesondere eine Wiegestation (27) zum Kontrollieren der Belegung oder Befüllung der dieser zugeführten Transport- oder Verpackungsmittel aufweist.

14. System nach einem der Ansprüche 10 bis 13, **dadurch gekennzeichnet, daß** die Verpackungs- und/oder Verteilstation eine Einrichtung zum Erstellen einer den zugeführten Transport- oder Verpackungsmitteln beizufügenden auftragsspezifische Rechnung, eines Lieferscheins o. dgl. umfaßt.

15. System nach einem der Ansprüche 10 bis 14, **dadurch gekennzeichnet, daß** die Verpackungs- und/oder Verteilstation eine Einrichtung zum Etikettieren, Adressieren und/oder Frankieren der zugeführten Transport- oder Verpackungsmittel umfaßt.

16. System nach einem der Ansprüche 10 bis 15, **dadurch gekennzeichnet, daß** die Transport- oder Verpackungsmittel Kartons, Wannen, Folien, Tüten, Paletten, Tablare o. dgl. umfassen.

## Claims

1. A method of order-picking, packing and/or distributing articles which are sorted and picked in an order-picking area and packed and/or distributed in a packing or distributing area,
a) with the articles which, specific to orders, are to be packed and/or distributed being sorted and picked fully automatically;
**characterized**
b) in that, optionally depending on whether an article has been provided with suitable transporting or packing means, transporting or packing means, specific to the articles and/or orders, are selected fully automatically and allocated to the article or articles;
c) **in that** the order picked articles are brought together with the respective transporting or packing means fully automatically and collected therein;
d) in that the transporting or packing means, and optionally the articles that have been provided with transporting and packing means, are packed and/or distributed fully automatically, with all the steps that take place being computer-controlled by means of an electronic computer system; and
e) in that the articles are conveyed at least on one first conveying lane and the transporting or packing means on at least one second conveying lane, with the conveying lanes intersecting at at least one first transfer location where the articles are transferred to the transporting or packing means or collected in the transporting or packing means.

2. A method according to claim 1, **characterized in that** the transporting or packing means, prior to being brought together, are at least partially stored intermediately in a buffer store and retrieved therefrom.

3. A method according to claim 2, **characterized in that** the transporting and packing means are selectively stored in the buffer store, depending on the type and/or size and/or volume.

4. A method according to one of the preceding claims, **characterized in that** the articles on the first conveying lane are conveyed to at least one further transfer location, optionally downstream of the first transfer location, the articles there being transferred to the transporting or packing means or collected therein.

5. A method according to one of claims 1 to 4, **characterized in that,** with various types of transporting or packing means being used, each type is conveyed on a second conveying lane of its own.

6. A method according to one of the preceding claims, **characterized in that** the transporting and packing means used are boxes, basins, films, bags, pallets, trays or the like.

7. A method according to one of the preceding claims, **characterized in that**, prior to the packing and/or distributing job, the occupied or charged transporting or packing means, at a checkpoint, are checked, in particular weighed, fully automatically as to collection and charge, with faultily occupied or charged transporting or packing means being singled out preferably fully automatically for further treatment.

8. A method according to one of the preceding claims, **characterized in that** a debit note, shipping note or the like is fed preferably fully automatically to the occupied or charged, and possibly even packaged, transporting or packing means.

9. A method according to one of the preceding claims, **characterized in that** the packaged transporting or packing means are transferred preferably fully automatically to a labelling, addressing and/or mailing system.

10. A system for order-picking and packing and/or distributing articles, in particular for putting the method according to claims 1 to 9 into practice, comprising an order-picking area and a packing and/or distributing area downstream thereof, with the articles, specific to orders, being sorted and picked in the order-picking area fully automatically by at least one order-picking station, **characterized in that** a fully automatic, computer-controlled packing and/or distributing station is disposed in the packing and/or distributing area (B), by means of which transporting or packing means, specific to articles and/or orders and allocated to the article or articles, are brought together with the articles that are transferred from the order-picking area (A) by at least one first conveying lane (12, 15) for collection of the articles and then packaged and/or distributed; **in that** an electronic control system (36) for control of the order-picking station and the packing and/or distributing station is provided; and **in that** the packing and/or distributing station comprises at least one second conveying lane (20, 30) for conveying the transporting or packing means which is connected to the first conveying lane by intersections, forming at least one transfer location (21, 22, 33, 34).

11. A system according to claim 10, **characterized in that** the packing and/or distributing station comprises at least one buffer store (18) where the transporting or packing means are at least partially stored intermediately prior to being transferred.

12. A system according to claim 10 or 11, **characterized in that** several second conveying lanes (20, 30) are provided for respectively conveying various types of transporting or packing means.

13. A system according to one of claims 10 to 12, **characterized in that** the packing and/or distributing station comprises a preferably fully automatic checkpoint, in particular weighing point (27), for checking the collection and charge of the transporting or packing means that are supplied thereto.

14. A system according to one of claims 10 to 13, **characterized in that** the packing and/or distributing station comprises a device for preparing a debit note, shipping note or the like, specific to orders for addition to the transporting or packing means that are supplied.

15. A system according to one of claims 10 to 14, **characterized in that** the packing and/or distributing station comprises a device for labelling, addressing and/or mailing the transporting or packing means that are supplied.

16. A system according to one of claims 10 to 15, **characterized in that** the transporting or packing means are boxes, basins, films, bags pallets, trays or the like.

## Revendications

1. Procédé pour la préparation de commandes et l'emballage et/ou la distribution d'articles qui sont préparés dans une zone de préparation de commandes et emballés et/ou distribués dans une zone d'emballage ou de distribution, où :
a) les articles à emballer et/ou à distribuer spécifiques à la commande sont préparés entièrement automatiquement, **caractérisé** :
b) en ce que, selon qu'un article est déjà équipé ou non d'un moyen de transport ou d'emballage approprié, le cas échéant, un moyen de transport ou d'emballage est sélectionné et attribué à l'article ou aux articles entièrement automatiquement en fonction de l'objet et/ou de la commande spécifique ;
c) en ce que les articles préparés sont réunis avec les moyens de transport ou d'emballage respectifs et disposés sur ou dans ceux-ci entièrement automatiquement ;
d) en ce que les moyens de transport ou d'emballage et, le cas échéant, les articles qui sont déjà équipés des moyens de transport ou d'emballage, sont emballés et/ou distribués entièrement automatiquement, l'ensemble des étapes étant exécutées de façon commandée par ordinateur au moyen d'un dispositif de commande électronique ; et
e) en ce que les articles sont transportés sur au moins une première installation de transport et les moyens de transport ou d'emballage sur au moins une deuxième installation de transport, les installations de transport se croisant à au moins un premier point de déversement auquel les articles sont transférés aux moyens de transport ou d'emballage ou introduits dans les moyens de transport ou d'emballage.

2. Procédé selon la revendication 1, **caractérisé en ce que** les moyens de transport ou d'emballage sont emmagasinés temporairement dans un magasin tampon et extraits de celui-ci au moins partiellement avant la réunion.

3. Procédé selon la revendication 2, **caractérisé en ce que** les moyens de transport ou d'emballage sont emmagasinés dans le magasin tampon de façon sélective en fonction de leur nature et/ou de leur taille et/ou de leur volume.

4. Procédé selon l'une quelconque des revendications précédentes, **caractérisé en ce que** les articles sont transportés sur la première installation de transport jusqu'à au moins un point de déversement supplémentaire, le cas échéant installé en aval du premier, auquel les articles sont transférés aux moyens de transport ou d'emballage ou introduits dans les moyens de transport ou d'emballage.

5. Procédé selon l'une quelconque des revendications 1 à 4, **caractérisé en ce que**, en cas d'utilisation de moyens de transport ou d'emballage de différents types, chaque type est transporté sur une deuxième installation de transport propre.

6. Procédé selon l'une quelconque des revendications précédentes, **caractérisé en ce que** des cartons, des caisses, des feuilles, des sachets, des palettes, des rayonnages ou similaires sont utilisés en tant que moyens de transport ou d'emballage.

7. Procédé selon l'une quelconque des revendications précédentes, **caractérisé en ce que** les moyens de transport ou d'emballage garnis ou remplis sont contrôlés de préférence entièrement automatiquement quant à la garniture ou au remplissage dans une station de contrôle avant l'emballage et/ou la distribution, et en particulier pesés, les moyens de transport ou d'emballage garnis ou remplis erronément étant séparés de préférence entièrement automatiquement aux fins d'un traitement supplémentaire.

8. Procédé selon l'une quelconque des revendications précédentes, **caractérisé en ce qu'**une facture, un bon de livraison ou un document similaire est apposé, de préférence entièrement automatiquement, sur les moyens de transport ou d'emballage garnis ou remplis, le cas échéant déjà emballés.

9. Procédé selon l'une quelconque des revendications précédentes, **caractérisé en ce que** les moyens de transport ou d'emballage emballés sont conduits de préférence entièrement automatiquement à une installation d'étiquetage, d'adressage et/ou d'affranchissement.

10. Système pour la préparation de commandes et l'emballage et/ou la distribution d'articles, en particulier pour la mise en oeuvre du procédé selon les revendications 1 à 9, avec une zone de préparation de commandes et une zone d'emballage et/ou de distribution située en aval de la zone de préparation de commandes, où les articles spécifiques à la commande sont préparés entièrement automatiquement dans la zone de préparation de commandes au moyen d'au moins une station de préparation de commandes **caractérisé en ce qu'**une station d'emballage et/ou de distribution commandée par ordinateur, entièrement automatique, est agencée dans la zone d'emballage et/ou de distribution (B), au moyen de laquelle des moyens de transport ou d'emballage sélectionnés selon les articles et/ou la commande et attribués à l'article ou aux articles sont réunis avec les articles acheminés à partir de la zone de préparation de commandes (A) au moyen d'au moins une première installation de transport (12, 15) aux fins de l'extraction de ceux-ci et sont ensuite emballés et/ou distribués, **en ce qu'**un dispositif de commande électronique (36) est prévu pour la commande de la station de préparation de commandes et de la station d'emballage et/ou de distribution, et **en ce que** la station d'emballage et/ou de distribution présente au moins une deuxième installation de transport (20, 30) aux fins du transport des moyens de transport ou d'emballage, qui est en liaison avec la première installation de transport en formant au moins un point de déversement (21, 22, 33, 34) par le biais de parcours de transport se croisant.

11. Système selon la revendication 10, **caractérisé en ce que** la station d'emballage et/ou de distribution comprend au moins un magasin tampon (18), dans lequel les moyens de transport ou d'emballage sont stockés temporairement au moins partiellement avant l'acheminement.

12. Système selon l'une quelconque des revendications 10 ou 11, **caractérisé en ce que** plusieurs deuxièmes installations de transport (20, 30) sont prévues pour le transport respectif de moyens de transport ou d'emballage de types différents.

13. Système selon l'une quelconque des revendications 10 à 12, **caractérisé en ce que** la station d'emballage et/ou de distribution présente une station de contrôle de préférence entièrement automatique, en particulier une station de pesage (27), aux fins du contrôle de la garniture ou du remplissage des moyens de transport ou d'emballage acheminés à celle-ci.

14. Système selon l'une quelconque des revendications 10 à 13, **caractérisé en ce que** la station d'emballage et/ou de distribution comprend une installation pour l'établissement d'une facture, d'un bon de livraison ou d'un document similaire spécifique à la commande à joindre aux moyens de transport ou d'emballage acheminés.

15. Système selon l'une quelconque des revendications 10 à 14, **caractérisé en ce que** la station d'emballage et/ou de distribution comprend une installation pour l'étiquetage, l'adressage et/ou l'affranchissement des moyens de transport ou d'emballage acheminés.

16. Système selon l'une quelconque des revendications 10 à 15, **caractérisé en ce que** les moyens de transport ou d'emballage comprennent des cartons, des caisses, des feuilles, des sachets, des palettes, des rayonnages ou similaires.
